(19) Europäisches Patentamt
European Patent Office
Office européen des brevets

(11) EP 1 735 595 B1

(12) EUROPÄISCHE PATENTSCHRIFT

(45) Veröffentlichungstag und Bekanntmachung des Hinweises auf die Patenterteilung:
**09.01.2008 Patentblatt 2008/02**

(51) Int Cl.:
***G01D 5/241*** (2006.01)

(21) Anmeldenummer: 05716480.8

(22) Anmeldetag: **31.03.2005**

(86) Internationale Anmeldenummer:
**PCT/EP2005/003389**

(87) Internationale Veröffentlichungsnummer:
**WO 2005/100924 (27.10.2005 Gazette 2005/43)**

(54) **VORRICHTUNG, SENSORANORDNUNG UND VERFAHREN ZUR KAPAZITIVEN POSITIONSERFASSUNG EINES ZIELOBJEKTS**

DEVICE SENSOR ARRANGEMENT AND METHOD FOR CAPACITIVE POSITIONAL DETERMINATION OF A TARGET OBJECT

DISPOSITIF, ENSEMBLE CAPTEUR ET PROCEDE POUR LA DETECTION CAPACITIVE DE POSITION D'UN OBJET CIBLE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **16.04.2004 DE 102004018630**

(43) Veröffentlichungstag der Anmeldung:
**27.12.2006 Patentblatt 2006/52**

(73) Patentinhaber: **Pepperl + Fuchs GmbH**
**68307 Mannheim (DE)**

(72) Erfinder:
• **VÖLKEL, Hardi**
  **68519 Viernheim (DE)**
• **EHRENFRIED, Ulrich**
  **68239 Mannheim (DE)**

(74) Vertreter: **Schiffer, Axel Martin et al**
**Weber & Heim Patentanwälte**
**Irmgardstrasse 3**
**81479 München (DE)**

(56) Entgegenhaltungen:
DE-A1- 2 830 432    DE-A1- 3 740 544
DE-A1- 4 100 556    DE-A1- 19 729 347
US-A- 4 523 195

**Beschreibung**

Die Erfindung betrifft eine Vorrichtung zur kapazitiven Positionserfassung eines Zielobjekts nach dem Oberbegriff des Anspruchs 1.

In weiteren Aspekten bezieht sich die Erfindung auf eine Sensoranordnung zur kapazitiven Positionserfassung eines Zielobjekts nach dem Oberbegriff des Anspruchs 12 und ein Verfahren zur kapazitiven Positionserfassung eines Zielobjekts nach dem Oberbegriff des Anspruchs 17.

Eine gattungsgemäße Vorrichtung weist eine Mehrzahl von kapazitiven Sonden auf, die über einen Nachweisbereich, in dem eine Position des Zielobjekts erfasst werden soll, verteilt angeordnet sind.

Eine gattungsgemäße Sensoranordnung zur kapazitiven Positionserfassung eines Zielobjekts weist eine Mehrzahl von kapazitiven Sonden auf, die in einem ersten Bereich, insbesondere auf einer Seite, eines Trägers über einen Nachweisbereich verteilt angeordnet sind, in dem eine Position des Zielobjekts erfassbar sein soll.

Bei einem gattungsgemäßen Verfahren zur kapazitiven Positionserfassung eines Zielobjekts wird eine Mehrzahl von kapazitiven Sonden über einen Nachweisbereich, in dem eine Position des Zielobjekts erfasst werden soll, angeordnet.

Bei der Vorrichtung, der Sondenanordnung und dem Verfahren dienen jeweils die Kapazitäten oder Kapazitätsänderungen der Sonden zur Umgebung in Abhängigkeit der Position bzw. einer Positionsänderung des Zielobjekts oder davon abgeleitete Größen als Messgrößen.

Der Begriff des Zielobjekts ist denkbar weit auszulegen. Es kann sich dabei um diskrete Gegenstände ebenso handeln wie um Stoffe, d.h. insbesondere Fluide, wie Flüssigkeiten und Gase sowie auch Schüttgüter. Im Folgenden werden die Begriffe Zielobjekt und Gegenstand auch synonym verwendet. Weiterhin soll unter dem Begriff Position im Hinblick auf Fluide und Schüttgüter auch deren Verteilung oder Ausdehnung verstanden werden.

Eine gattungsgemäße Vorrichtung ist in DE 198 51 213 C1 beschrieben. Bei der dort offenbarten kapazitiven Sensoranordnung ist auf einer flexiblen Folie eine Mehrzahl von Kondensatorbelägen aufgebracht. Die Folie wird in eine gewünschte Form, beispielsweise eine U- oder S-Form gebogen und zum Nachweis von Fluiden, also von flüssigen oder gasförmigen Medien, verwendet. Als Messgröße dient dabei eine durch die dielektrischen Eigenschaften des nachzuweisenden und in die Nähe der jeweiligen Sonde gebrachten Mediums veränderte Kapazität.

Ein kapazitiver Näherungsschalter ist in DE 196 23 969 A1 offenbart.

In DE 195 03 203 A1 ist ein kapazitiver Sensor beschrieben, bei dem eine Position eines Gegenstands oder eine Masseverteilung durch Messen eines Verschiebestroms bestimmt werden kann.

Eine Matrix von kapazitiven Positionssensoren ist in EP 0 609 021 A2 offenbart. Gegenstand der US-5,136,286 ist eine Vorrichtung zur kapazitiven Bestimmung der Orientierung eines Messgerätezeigers. Hierbei werden in besonderer Weise geformte Elektroden eingesetzt. Eine Vorrichtung zur kapazitiven Überwachung der Zusammensetzung einer Probe, z. B. von Blisterpackungen für Arzneimittel, ist in EP 0 302 727 A2 beschrieben.

Im Bereich der Positionserfassung eines Zielobjekts sind außerdem induktive Verfahren und Vorrichtungen bekannt. Derartige Vorrichtungen werden bei einer Vielzahl von industriellen Prozessen im Bereich der Automatisierung eingesetzt. Zahlreiche Anwendungsmöglichkeiten bestehen auch im Bereich der Automobiltechnik. Beispielsweise ist in DE 102 04 453 A1 ein analoger induktiver Wegaufnehmer beschrieben, mit dem eine relative Verschiebung zwischen einem Fahrzeugsitz und einer Kraftfahrzeugkarosserie bestimmt werden kann. Als Messprinzip dient dabei die bei einer Relativverschiebung eines Testkörpers aus einem Material hoher magnetischer Permeabilität bewirkte Veränderung der magnetischen Induktion.

In diesem Zusammenhang sind außerdem lineare Wegmesssysteme bekannt, bei denen eine gekippte Längsspule, ein induktiver Wegaufnehmer mit magnetischer Kopplung oder ein aus vielen Einzelspulen bestehender induktiver Wegaufnehmer verwendet wird. Bei diesen Lösungen hat sich als ungünstig herausgestellt, dass die jeweiligen Nachweissignale eine vergleichsweise große Abstandsabhängigkeit aufweisen und deshalb nur begrenzte Wegstrecken überwacht werden können. Weiterhin können häufig aus prinzipiellen Gründen nur ferromagnetische Objekte oder Gegenstände nachgewiesen werden. Dies.ist wegen der mechanischen Empfindlichkeit ferromagnetischer Gegenstände unerwünscht. Schließlich ermöglichen Lösungen mit einer großen Zahl von Einzelspulen zwar die Überwachung eines prinzipiell sehr großen Bereichs. Da aber, um ein Übersprechen der Signale der einzelnen Spulen zu vermeiden, jede einzelne Spule mit einer unterschiedlichen Frequenz beaufschlagt wird, sind diese Lösungen mit einem hohen schaltungstechnischen und apparativen Aufwand verbunden.

**Aufgabe** der Erfindung ist es, eine Vorrichtung, eine Sondenanordnung und ein Verfahren zur kapazitiven Positionserfassung eines Zielobjekts anzugeben, mit denen sich ein Zielobjekt über eine prinzipiell beliebig lange Wegstrecke mit einer hohen Genauigkeit erfassen lässt. Die Vorrichtung und die Sondenanordnung sollen außerdem konstruktionsmäßig einfach zu realisieren sein.

Diese Aufgabe wird in einem ersten Aspekt der Erfindung durch die Vorrichtung mit den Merkmalen des Anspruchs 1 gelöst.

In weiteren Aspekten der Erfindung wird die Aufgabe durch die Sondenanordnung mit den Merkmalen des Anspruchs 11 und durch das Verfahren mit den Merkmalen des Anspruchs 16 gelöst.

Vorteilhafte Weiterbildungen der erfindungsgemäßen Vorrichtung und der erfindungsgemäßen Sensoranordnung sowie bevorzugte Varianten des erfindungsgemäßen Verfahrens sind Gegenstand der Unteransprüche.

Die gattungsgemäße Vorrichtung ist erfindungsgemäß dadurch gekennzeichnet, dass die Sonden jeweils über Koppelkapazitäten mit einer Spannungsquelle verbunden und mit einer Speisespannung beaufschlagbar sind und dass eine mit den Sonden verbundene Auswerteeinrichtung vorgesehen ist, mit welcher die Sondensignale zu einem Ausgangssignal, das ein Maß für die Position des zu erfassenden Zielobjekts ist, verarbeitbar sind.

Die Sensoranordnung der oben beschriebenen Art ist erfindungsgemäß dadurch weitergebildet, dass zur Bildung von Koppelkapazitäten, über welche eine Speisespannung auf die Sonden einkoppelbar ist, in einem zweiten Bereich, insbesondere auf einer gegenüberliegenden Seite, oder innerhalb des Trägers, mindestens eine Koppelelektrode vorgesehen ist und dass der Träger zur Bildung einer Koppelschicht wenigstens teilweise aus einem dielektrischen Material gebildet ist.

Zur Weiterbildung des gattungsgemäßen Verfahrens zur kapazitiven Positionserfassung eines Zielobjekts schlägt die Erfindung vor, dass die Sonden jeweils über Koppelkapazitäten mit einer Speisespannung beaufschlagt werden und dass die Sondensignale mit Hilfe einer Auswerteeinrichtung zu einem Ausgangssignal, das ein Maß für die Position des zu erfassenden Zielobjekts ist, verarbeitet werden.

Als ein erster Kerngedanke der vorliegenden Erfindung kann angesehen werden, eine Speisespannung, beispielsweise eine Wechselspannung, über Koppelkapazitäten auf die Mehrzahl von kapazitiven Sonden zu koppeln.

Ein weiterer Grundgedanke der vorliegenden Erfindung besteht im Hinblick auf die Sondenanordnung darin, diese Sondenanordnung sehr kompakt auf einem Träger auszubilden, bei dem in einem ersten Bereich eine Mehrzahl von Sonden angeordnet ist und bei dem, beabstandet zu dem ersten Bereich, in einem zweiten Bereich mindestens eine Koppelelektrode zur Bildung der Koppelkapazitäten mit den Sonden vorgesehen ist.

Die Sonden und die Koppelelektroden können dabei sowohl direkt an der Außenseite des Trägers, der wenigstens teilweise aus einem dielektrischen Material gebildet ist, oder in dessen Innerem vorgesehen sein.

Als erster wesentlicher Vorteil der Erfindung kann angesehen werden, dass die Position eines beliebigen metallischen oder nichtmetallischen Objekts nachgewiesen werden kann, da in jedem Fall eine Änderung der Kapazität der Sonden zur Umgebung bewirkt wird. Die Anordnung der Sonden, beispielsweise entlang einer Wegstrecke kann dabei prinzipiell beliebig lang sein und beliebige Formen annehmen. Beispielsweise sind geradlinige, also lineare Wege, kreisförmige oder Zick-Zack-Wege, ebenso möglich, wie flächig, also zweidimensional, oder auch räumlich, d.h. dreidimensional, angeordnete Sondenkonfigurationen.

Es sind also beliebige Topologien für die Sonden möglich, insbesondere auch konzentrische, rechtwinklige und matrix- oder arrayartige Anordnungen. Grundsätzlich sind alle "unebenen" technisch herstellbaren Topologien möglich.

Insbesondere können mit der erfindungsgemäßen Vorrichtung und dem erfindungsgemäßen Verfahren neben diskreten nachzuweisenden Gegenständen und Objekten auch Fluide, also Flüssigkeiten und Gase, sowie Schüttgüter unabhängig vom jeweiligen Material nachgewiesen werden. Insbesondere können auch robuste metallische Targets nachgewiesen werden, was für zahlreiche Anwendungen bebedeutsam ist.

Ein weiterer wesentlicher Vorteil des hier vorgeschlagenen prinzipiell berührungslos arbeitenden Positionserfassungssystems ist darin zu sehen, dass sich die Vorrichtung, die Sondenanordnung und das Verfahren jeweils mit geringem konstruktivem Aufwand realisieren lässt. Die Auswerteeinrichtung verwendet erfindungsgemäß immer die Sondensignale, beispielsweise die Sondenspannungen, um die Position des nachzuweisenden Zielobjekts zu bestimmen.

Vorteilhaft im Hinblick auf die erzielbare Nachweisgenauigkeit ist außerdem, dass Fehlergrößen, die auf alle Sonden, also alle Kanäle, gleichzeitig einwirken, bei der Auswertung keinen Einfluss mehr haben. Zu diesen Fehlergrößen gehören Temperatureffekte ebenso wie elektrische Störungen, beispielsweise aufgrund von elektrischen Feldern beim Schweißen oder Funkstörspannungen, sowie Effekte, die sich aus der Abhängigkeit der Sondensignale von den jeweiligen Abständen des Objekts ergeben.

Das Material des nachzuweisenden Zielobjekts wirkt sich auf die Kapazitäten aller Sonden in gleicher Weise aus, so dass das Ergebnis der Auswertung unabhängig vom Material des nachzuweisenden Zielobjekts ist.

Das Zielobjekt oder der Gegenstand selbst kann aus Metall, Kunststoff, Glas, Keramik, Papier, Holz, prinzipiell also aus einem beliebigen Material bestehen. Wenn der nachzuweisende Gegenstand aus einem leitenden Material besteht, kann ein Nachweis darüber hinaus unabhängig davon erfolgen, ob der Gegenstand geerdet ist oder nicht.

Besonders bedeutsame praktische Anwendungen hat die Erfindung für alle linearen Wegmessungen, für Weg- oder Winkelmessungen in Kraftspannern sowie für Füllstandsmessungen von Flüssigkeiten und Schüttgütern, direkt oder durch eine Behälterwand hindurch.

Gemäß einem weiteren Kerngedanken der vorliegenden Erfindung bilden die Koppelkapazitäten und die Kapazitäten der Sonden zur Umgebung, die aufgrund der veränderlichen Position des nachzuweisenden Zielobjekts variieren, jeweils kapazitive Spannungsteiler.

Erfindungsgemäß werden also, im Unterschied zum Stand der Technik, nicht direkt die kapazitiven Sonden, die auch als Messsonden bezeichnet werden können, gespeist, sondern es wird über die Koppelkapazität oder die.Koppelkapazitäten und die Messkapazität oder die Messkapazitäten ein Spannungsteiler aufgebaut.

Im Unterschied zum Stand der Technik, wo unter dem Begriff Koppelkapazität auch eine Kapazität verstanden wird, deren Kopplung durch Annäherung eines Gegenstands verändert wird, wird der Begriff "Koppelkapazität" vorliegend als "Einkoppel"-Kapazität verstanden. Hierbei handelt es sich um diejenige Kapazität, über die die Wechselspannung auf die Messsonde eingekoppelt wird.

Ein wesentlicher struktureller und prinzipieller Unterschied der vorliegenden Erfindung zum Stand der Technik ist, dass die direkt vom Generator gespeiste Kapazität, also die Koppelkapazität, bei der vorliegenden Erfindung immer im Wesentlichen unbeeinflusst bleibt. Aus diesem Grund kann die erfindungsgemäße Sondenanordnung mit diskreten Kondensatoren realisiert werden. Im Gegensatz zum Stand der Technik wird bei der vorliegenden Erfindung erst die Folgekapazität durch Annäherung eines Gegenstands verändert. Eine solche Folgekapazität ist im Stand der Technik nicht vorhanden.

Bei einer besonders bevorzugten Variante des erfindungsgemäßen Verfahrens werden als Sondensignale die jeweiligen Sondenspannungen ausgewertet.

Auf diese Weise geht, wie nachstehend noch erläutert wird, neben der Speisespannung im Wesentlichen das Verhältnis der Sondenkapazität zur Koppelkapazität in das gemessene Signal ein.

Bei einer bevorzugten Ausgestaltung der erfindungsgemäßen Vorrichtung ist mindestens eine erfindungsgemäße Sondenanordnung vorgesehen. Mit der erfindungsgemäßen Sondenanordnung lassen sich nicht nur die Sonden und die Koppelkapazitäten besonders kompakt und einfach realisieren. Sie ermöglichen außerdem eine sehr hohe Variabilität der Anordnung der Sonden.

Beispielsweise kann der Träger als Leiterplatte ausgebildet sein, so dass fertigungsmäßig auf die hoch entwickelte Leiterplattentechnologie zurückgegriffen werden kann.

Form und Größe der Sonden sind prinzipiell beliebig, wobei bevorzugt plattenartige Elektroden, beispielsweise auf einer Leiterplatte vorgesehen werden. Je nach gewünschter Ortsauflösung und Empfindlichkeit der Sonden, kann deren Fläche dabei von wenigen Quadratmillimetern bis zu einigen Quadratzentimetern und darüber reichen. Insbesondere ist es zweckmäßig, Form und Größe der Sonden im Hinblick auf das nachzuweisende Zielobjekt gezielt auszuwählen.

Eine besonders große Variabilität im Hinblick auf den zu überwachenden Bereich kann erzielt werden, wenn der Träger als flexible Leiterplatte ausgebildet ist. Eine solche flexible Leiterplatte kann prinzipiell in jede gewünschte Form gebracht werden, so dass beliebige dreidimensionale.Bereiche überwacht werden können. Beispielsweise kann die Position eines Hebels, der sich auf einem Kreis- oder einem Kugelsegment bewegt, überwacht werden.

Als Träger kann auch eine Folie verwendet werden, bei der die entsprechenden metallischen Strukturen unter Verwendung einer geeigneten Maske aufgebracht, beispielsweise.aufgedampft, sind.

Die Sondenanordnung kann also als beidseitig metallisiertes zusammenhängendes Dielektrikum in einem Stück oder auch als beidseitig metallisiertes unterbrochenes Dielektrikum mit verteilten Kapazitäten aufgebaut sein.

Eine gewisse Gestaltungsfreiheit im Hinblick auf dreidimensionale zu überwachende Bereiche kann aber auch dadurch erzielt werden, dass mehrere erfindungsgemäße Sondenanordnungen, bei denen als Träger eine konventionelle Leiterplatte eingesetzt ist, verwendet werden. Getrennte Leiterplatten können darüber hinaus auch von Vorteil sein, um eventuelle mechanische Spannungen oder Temperaturschwankungen auszugleichen.

Auch bezüglich der Koppelelektroden besteht eine große Gestaltungsfreiheit. Prinzipiell kann die Koppelelektrode in eine Mehrzahl von Einzelelektroden unterteilt sein. Dies kann zweckmäßig sein, wenn die einzelnen Koppelkapazitäten mit unterschiedlichen Potenzialen beaufschlagt werden sollen. Bei einer konstruktionsmäßig sehr einfachen Variante ist aber die Koppelelektrode als durchgehende Potenzialfläche ausgebildet. Dies ist besonders bedeutsam, da bei dem hier vorgeschlagenen kapazitiven Positionserfassungssystem im Unterschied zu einem induktiven Nachweissystem mit einer Vielzahl von Spulen die einzelnen Kapazitäten nicht mit unterschiedlichen Frequenzen beaufschlagt werden müssen. Die durchgehende Koppelelektrode dient somit als gemeinsamer Fußpunkt, der mit einer Speisespannung, insbesondere einer Wechselspannung, beaufschlagt werden kann. Im Vergleich zu einem induktiven System ist deshalb auch die erforderliche Elektronik wesentlich einfacher zu realisieren.

Besonders nutzbringend lässt sich die erfindungsgemäße Sondenanordnung einsetzen, wenn auf dem Träger zusätzlich Teile einer Auswerteelektronik, also Teile der Auswerteeinrichtung, angeordnet sind. Auf diese Weise sind sehr kompakte Aufbauten möglich.

Die Sonden und die Koppelelektroden können prinzipiell im Inneren des Trägers angeordnet sein. Bei einer einfachen Variante, die beispielsweise aus einer doppelseitig beschichteten Leiterplatte gefertigt wird, sind die Sonden und die Koppelelektroden aber direkt auf der Außenseite des Trägers angeordnet. Eine Anordnung der Koppelelektroden innerhalb des Trägers kann bevorzugt sein, wenn zur Abschirmung oder zur Aufnahme von weiteren Schaltungskomponenten auf oder in dem Träger weitere Metallschichten vorgesehen sind. Diese Varianten werden zweckmäßig dort eingesetzt, wo Störfelder abgeschirmt werden müssen. Prinzipiell können die Koppelkapazitäten aber auch wenigstens teilweise als diskrete Kondensatoren ausgebildet sein. Dies kann beispielsweise von Vorteil sein, wenn einzelne Sonden für verschiedene Anwendungen unterschiedlich positioniert werden müssen.

Die Genauigkeit der Auswertung und damit des Positionsnachweises lässt sich insgesamt erhöhen, wenn mindestens eine der Sonden als Referenzsonde ausgebildet und/oder verwendet wird. Hierbei kann es sich insbesondere um eine inaktive Messsonde handeln, d.h. eine Sonde, die so positioniert ist, dass das nachzuweisende Zielobjekt niemals in deren Nachweisbereich gelangt. Prinzipiell kann aber auch das Signal einer aktiven Messsonde als Referenz herangezogen werden, wenn sichergestellt wird, dass sich das nachzuweisende Objekt zum fraglichen Zeitpunkt nicht im Nachweisbereich dieser Sonde befindet. Mit Hilfe der Referenzmessung an der Referenzsonde können dann beispielsweise die Spannungsamplituden der übrigen Amplituden abgeglichen werden.

Besonders vorteilhaft ist in diesem Zusammenhang, wenn die Messelektroden oder Messsonden dieselbe oder zumindest eine ähnliche Form und/oder Fläche haben, wie die Referenzelektrode oder die Referenzelektroden. Die Auswertung der jeweiligen Signale im Hinblick auf die Positionsbestimmung gestaltet sich dann besonders einfach.

In einer einfachen Ausgestaltung weist die Auswerteeinrichtung zumindest für jede Sonde einen Gleichrichter auf.

Um die Sondensignale rechnerisch zu verarbeiten, weist die Auswerteeinheit zweckmäßig eine zentrale Verarbeitungseinheit auf. Hierbei kann es sich zwar prinzipiell auch um eine aus Analogkomponenten aufgebaute Schaltung, beispielsweise um eine Operationsverstärkerschaltung, handeln. Bevorzugt wird hierfür aber ein Mikroprozessor eingesetzt. Bei dieser Variante ist dann außerdem mindestens ein Analog-Digital-Wandler zum Digitalisieren der analogen Messsignale vorgesehen.

Bei kostengünstigen Varianten kann auf eine große Zahl von Analog-Digital-Wandlern verzichtet werden und stattdessen bei der Auswerteeinrichtung ein oder mehrere Multiplexer vorgesehen werden, über den bzw. über die die Sondensignale von mindestens zwei Sonden der zentralen Verarbeitungseinheit, beispielsweise also dem Mikroprozessor, zuführbar sind.

Wenn für bestimmte Anwendungen die Unabhängigkeit von einer Abtast-Frequenz eines Multiplexers gewünscht ist, kann selbstverständlich auch jeder Kanal selbstständig mit Gleichrichter, eventueller Verarbeitungselektronik und Analog-Digital-Wandler ausgerüstet werden.

Im Hinblick auf die rechnerische Auswertung der Sondensignale, beispielsweise der Sondenspannungen, besteht größtmögliche Freiheit. Nach dem Prinzip bekannter Brückenschaltungen können beispielsweise die Differenzen der einzelnen Signalspannungen ausgewertet werden. Bei einer bevorzugten Variante des erfindungsgemäßen Verfahrens werden zur Auswertung die Quotienten mehrerer Spannungsamplituden gebildet. Auf diese Weise können ebenfalls unerwünschte Störeffekte, die auf alle Sonden gleichartig einwirken, wie Temperatur und elektrische Störfelder, eliminiert werden.

Auch Kombinationen dieser Verfahren sind möglich.

Die Schnelligkeit der Signalverarbeitung kann schließlich erhöht werden, wenn die Auswerteeinrichtung zur Vorverarbeitung der analogen Sondensignale einen Signalprozessor aufweist.

Weitere Vorteile und Eigenschaften der erfindungsgemäßen Vorrichtung, der erfindungsgemäßen Sondenanordnung und des erfindungsgemäßen Verfahrens werden nachstehend unter Bezugnahme auf die beigefügten schematischen Figuren beschrieben.

Darin zeigen:

Fig. 1    eine schematische Darstellung eines ersten Ausführungsbeispiels einer erfindungsgemäßen Vorrichtung;

Fig. 2    eine schematische Teilansicht eines zweiten Ausführungsbeispiels einer erfindungsgemäßen Vorrichtung;

Fig. 3    eine schematische Teilansicht eines dritten Ausführungsbeispiels der erfindungsgemäßen Vorrichtung;

Fig. 4    ein Diagramm, in dem die Sondenspannung von drei Sonden gegen die Position eines nachzuweisenden Gegenstands aufgetragen ist;

Fig. 5    ein Diagramm, in dem die Signalspannung von drei Sonden in Abhängigkeit der Füllhöhe einer nachzuweisenden Flüssigkeit oder eines Schüttguts aufgetragen ist;

Fig. 6    ein erstes Ausführungsbeispiel einer erfindungsgemäßen Sondenanordnung;

Fig. 7    ein zweites Ausführungsbeispiel einer erfindungsgemäßen Sondenanordnung;

Fig. 8    ein drittes Ausführungsbeispiel einer erfindungsgemäßen Sondenanordnung und

Fig. 9    ein alternatives Beispiel zum Aufbau der Koppelkapazitäten.

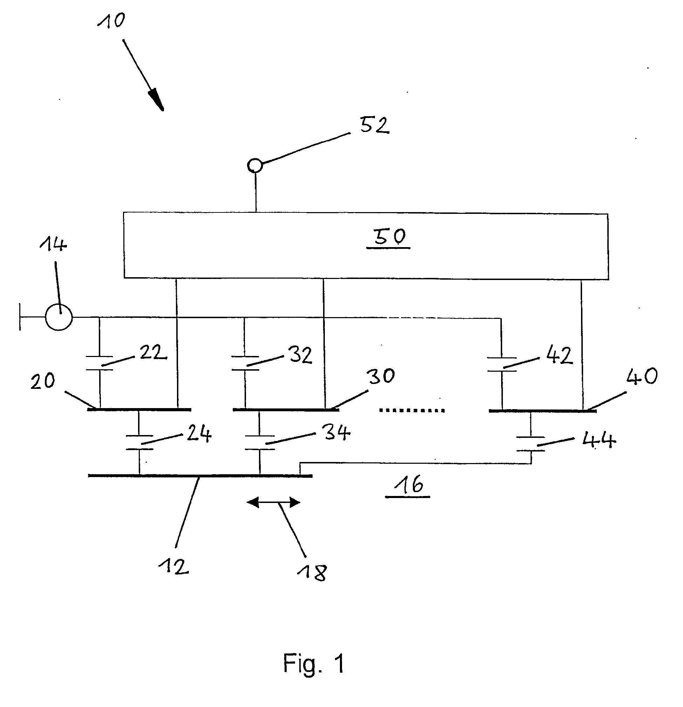

Ein erstes Ausführungsbeispiel einer erfindungsgemäßen Vorrichtung 10 ist schematisch in Fig. 1 dargestellt. Die Vorrichtung 10 besteht allgemein aus einer Mehrzahl, d.h. mindestens zwei, kapazitiven Messplatten oder Sonden 20, 30, 40. Über Koppelkondensatoren 22, 32, 42 wird eine Wechselspannung als Speisespannung von einer Spannungsquelle 14 auf die Sonden 20, 30, 40 gekoppelt. Zwischen den einzelnen Sonden 20, 30, 40 und einem nachzuweisenden Gegenstand 12 als Zielobjekt entstehen Kapazitäten 24, 34, 44. Diese Kapazitäten sind in Fig. 1 in der Art eines Ersatzschaltbildes dargestellt. Auch bei den Koppelkapazitäten 22, 32, 42 muss es sich nicht notwendigerweise um diskrete Kondensatoren handeln.

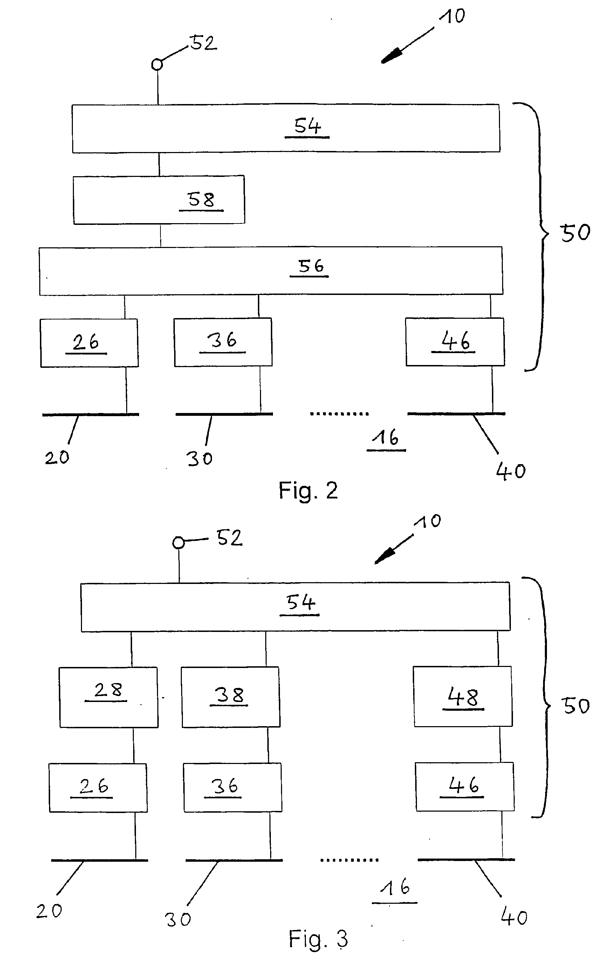

Die Sonden 20, 30, 40 sind außerdem jeweils mit einer Auswerteeinrichtung 50, die nachstehend unter Bezugnahme auf die Fig. 2 und 3 näher erläutert wird, verbunden. Die Auswerteeinrichtung 50 wertet die Sondenspannungen der Sonden 20, 30, 40 aus und generiert ein Ausgangssignal 52 in Abhängigkeit der Position des Gegenstands 12 relativ zu den Sonden 20, 30, 40.

Zur Erläuterung der Funktionsweise der erfindungsgemäßen Vorrichtung 10 wird zur Vereinfachung von einem geerdeten Gegenstand 12 ausgegangen. Das Bezugspotenzial der Spannungsquelle 14 ist ebenfalls Erde. Die Koppelkapazität 22 und die Kapazität 24 bilden einen kapazitiven Spannungsteiler mit der Sondenspannung als Mittenspannung. Die Sondenspannung $U_{20}$ ergibt sich aus der eingekoppelten Spannung $U_0$, dem Wert $C_{22}$ der Koppelkapazität 22 und dem Wert $C_{24}$ der Kapazität 24:

$$U_{20} = U_0 * 1/(1 + C_{24}/C_{22}).$$

Und entsprechend für die weiteren Sonden 30, 40.

Je näher der Gegenstand 12 an einer Sonde 20, 30, 40 ist, desto kleiner ist die jeweilige Sondenspannung. Die Sondenspannungen der verschiedenen Sonden 20, 30, 40 sind also von der Position des Gegenstands 12 abhängig, wobei diejenige Sonde den niedrigsten Pegel anzeigt, der der Gegenstand 12 am nächsten ist. Da auf die Koppelkapazitäten 22, 32, 42 von der Spannungsquelle 14 eine Wechselspannung gegeben wird, liegt auch an den Sonden 20, 30, 40 jeweils eine Wechselspannung an, die mit Hilfe der Auswerteeinrichtung 50 verarbeitet wird.

Lediglich zur Vereinfachung der Betrachtung wurde der Gegenstand 12 als geerdet betrachtet. Die Messung funktioniert aber ebenso mit nicht geerdeten Zielobjekten. Gegenüber dem Erdpotenzial weist jeder nachzuweisende Gegenstand 12 eine parasitäre Kapazität auf. Die Kapazität einer der Sonden 20, 30, 40 zur Erde wird durch die Reihenschaltung aus der Kapazität der Sonde zum Gegenstand 12 und der parasitären Kapazität des Gegenstands 12 zum Erdpotenzial gebildet. Die Kapazität der Sonde gegen einen geerdeten Gegenstand ist größer als die Kapazität der Sonde gegen einen nicht geerdeten Gegenstand wegen dieser Reihenschaltung. Aus diesem Grund verändert ein nicht geerdeter Gegenstand 12 die Sondenspannungen weniger stark als ein geerdeter Gegenstand 12.

Mit dem Pfeil 18 ist in Fig. 1 eine Verschiebung des Gegenstands 12 innerhalb des Nachweisbereichs 16 angedeutet.

Die Auswerteschaltung 50 verwendet immer mehrere Sondenspannungen, um die Position des Gegenstands 12 zu bestimmen. Fehlergrößen, wie beispielsweise die Temperatur, elektrische Störungen aufgrund von Schweißfeldern oder Funkstörspannungen sowie der Abstand des Gegenstands 12 zu den Sonden 20, 30, 40, die auf alle Kanäle gleichzeitig einwirken, können auf diese Weise herausgerechnet werden.

Da sich das Material des Gegenstands 12 auf alle Kapazitäten 24, 34, 44 gleich auswirkt, ist das Ergebnis der Auswertung außerdem unabhängig vom Material des Gegenstands 12. Da schließlich auch die parasitäre Kapazität eines nicht geerdeten Gegenstands 12 für alle Sonden 20, 30, 40 gleich groß ist, ist das Ergebnis der Auswertung außerdem unabhängig von der Erdung des Gegenstands.

Zwei Beispiele für die Ausgestaltung der Auswerteeinrichtung 50 im Detail sind in den Fig. 2 und 3 dargestellt. Äquivalente Komponenten sind dabei jeweils mit denselben Bezugszeichen gekennzeichnet.

Bei dem in Fig. 2 gezeigten Beispiel wird die Sondenspannung der Sonden 20, 30, 40 jeweils zunächst auf einen Gleichrichter 26, 36, 46 geführt. Die gleichgerichteten Signale werden sodann über einen Multiplexer 56 und einen Analog-Digital-Wandler 58 einem Mikroprozessor 54 zugeführt. Der Mikroprozessor 54 errechnet aus den digitalisierten Signalen ein Ausgangssignal in Abhängigkeit der Position des Gegenstands 12 und gibt dieses Signal an den Ausgang 52 aus. Bei diesem Beispiel kann auf eine Vielzahl von teuren Analog-Digital-Wandlern verzichtet werden.

Im Unterschied zu dem Beispiel aus Fig. 2 ist bei der in Fig. 3 dargestellten Variante für jeden Sondenkanal ein eigener Analog-Digital-Wandler 28, 38, 48 vorgesehen. Die Auswertung der Sondenspannungen der Sonden 20, 30, 40 kann deshalb prinzipiell unabhängig von einer Abtast-Frequenz eines Multiplexers erfolgen.

Selbstverständlich sind auch Mischformen der in den Fig. 2 und 3 gezeigten Beispiele möglich.

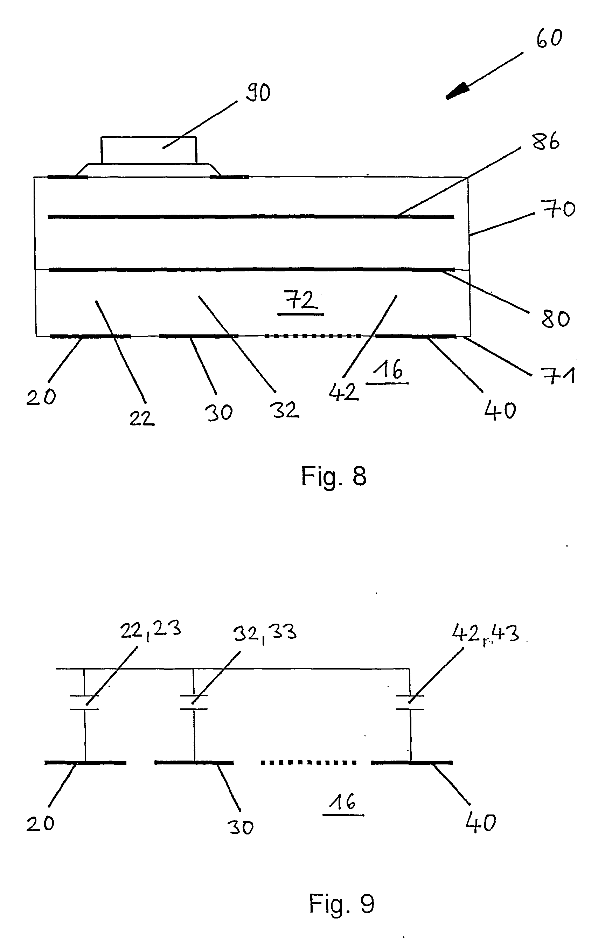

Die Koppelkapazitäten 22, 32, 42 der in Fig. 1 gezeigten Vorrichtung 10 können prinzipiell als diskrete Kondensatoren 23, 33, 43 ausgebildet sein, wie dies in Fig. 9 schematisch dargestellt ist. Diese Variante ist insbesondere dann zweckmäßig, wenn die Positionierung von einer oder mehreren Sonden verändert werden soll, beispielsweise um unterschiedliche Bereiche oder Wege zu überwachen. In dem in Fig. 9 gezeigten Beispiel sind die Sonden 20, 30, 40 in einem zu überwachenden Bereich 16 linear angeordnet.

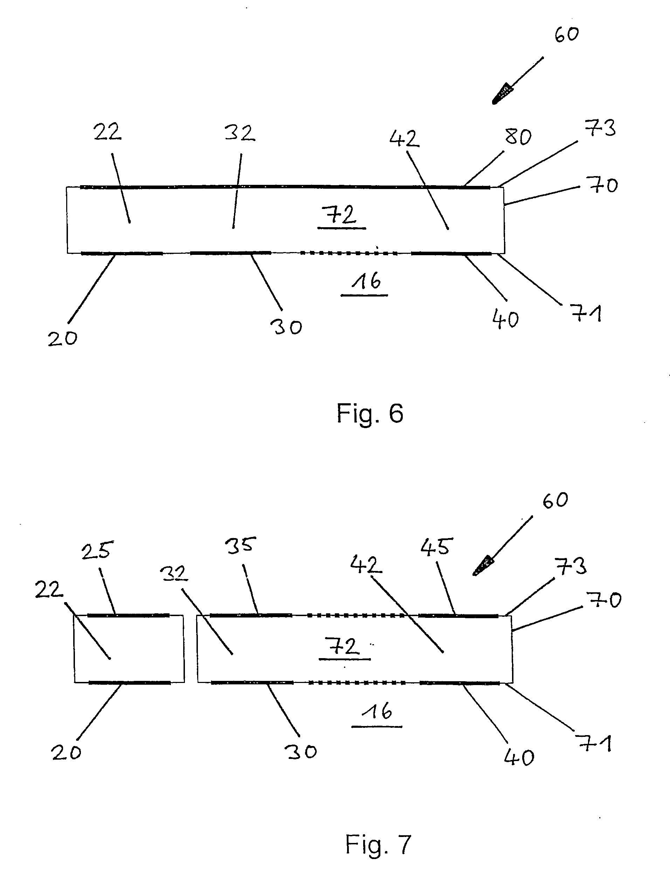

Besonders vorteilhaft wird aber zur Positionierung der Sonden 20, 30, 40 eine erfindungsgemäße Sondenanordnung 60, von denen Ausführungsbeispiele in den Fig. 6 bis 8 dargestellt sind, eingesetzt.

Das in Fig. 6 gezeigte erste Beispiel einer erfindungsgemäßen Sondenanordnung 60 ist aus einer doppelseitig beschichteten Leiterplatte gefertigt. Auf einer ersten Seite 71 der als Träger 70 fungierenden Leiterplatte sind dabei die Sonden 20, 30, 40 aus der Leiterplattenbeschichtung gebildet. Diese Einzelsonden 20, 30, 40 können prinzipiell beliebige Formen, insbesondere auch unterschiedliche Größen, aufweisen. Auf der gegenüberliegenden Außenseite 73 des Trägers 70 ist eine durchgehende Koppelelektrode 80 zur Bildung der Koppelkapazitäten 22, 32, 42 gebildet. Diese Koppelelektrode 80, die prinzipiell die Funktion einer Kondensatorplatte wahrnimmt und zum Anschluss des Wechselspannungsgenerators dient, wird auch als Fußpunkt bezeichnet.

Da über die kapazitiven Spannungsteiler nur sehr geringe Ströme fließen, kann die Verbindung mit der Speisespannung auch relativ hochohmig sein, beispielsweise sind hier Ohmsche Widerstände von bis zu 1 Megaohm möglich. Der Schaltungsaufbau ist somit insgesamt sehr unkritisch.

Erfindungsgemäß ist außerdem durch das Material der Leiterplatte 70 zwischen der Koppelelektrode 80 und den Sonden 20, 30, 40 eine Koppelschicht 72 gebildet, die aufgrund der dielektrischen Eigenschaften des Leiterplattenmaterials die Koppelkapazitäten 22, 32, 42 erhöht. Prinzipiell kann die Koppelschicht 72 aus einem Stoff mit einem bestimmbaren Dielektrikum bestehen, beispielsweise also aus Leiterplattenmaterial, Kunststoff, Glas, Keramik, Luft oder aus einem Schaum.

Das in Figur 7 gezeigte Beispiel unterscheidet sich von der Variante nach Figur 6 im Wesentlichen dadurch, dass nur die Sonden 30, 40 auf einem gemeinsamen Träger 70, die Sonde 20 jedoch auf einem separaten Träger angeordnet ist. Weiterhin weist die Variante in Figur 7 keine durchgehende Koppelelektrode auf, sondern es sind jeweils separate Koppelelektroden 25, 35, 45 zur Bildung der Koppelkapazitäten 22, 32, 42 vorgesehen. Aufgrund der getrennten Fußpunkte kann deshalb jeder Koppelkapazität 22, 32, 42 prinzipiell eine unterschiedliche Wechselspannung zugeführt werden. Für den häufigsten Anwendungsfall, in dem die Koppelelektroden 25, 35, 45 eine einheitliche Potenzialfläche bilden, können wiederum die Verbindungen zwischen den Koppelelektroden 25, 35, 45 relativ hochohmig sein.

Ein komplexeres Ausführungsbeispiel ist schließlich in Figur 8 gezeigt. Dort sind zwar die Sonden 20, 30, 40 wiederum auf der Außenseite 71 des Trägers 70 angeordnet. Die Koppelelektroden 80 ist jedoch in Inneren des Trägers 70, bei dem es sich beispielsweise um eine mehrlagige Leiterplatte handeln kann, angeordnet. Über der Koppelelektrode 80 ist eine weitere metallische Schicht 86 vorgesehen, die optional zur Abschirmung der Sonden vor Einstrahlungen von Störfeldern dienen kann. Auf der den Sonden 20, 30, 40 gegenüberliegenden Seite des Trägers 70 ist dabei eine elektrische Schaltung, schematisch dargestellt durch die Komponente 90, angeordnet. Auch hier werden durch die Sonden 20, 30, 40 und die Koppelelektrode 80 jeweils Koppelkapazitäten 22, 32, 42 gebildet, die durch die dielektrischen Eigenschaften der Koppelschicht 42 erhöht werden. Mit der in Figur 8 gezeigten Sondenanordnung lassen sich, da gleichzeitig Teile der Auswerteelektronik integriert werden können, sehr kompakte Aufbauten erzielen.

Um die Bewegung eines Gegenstands 12 lückenlos erfassen zu können, müssen die Sonden 20, 30, 40 so relativ zueinander angeordnet werden, dass sich ihre Empfindlichkeitskurven zumindest teilweise überlappen.

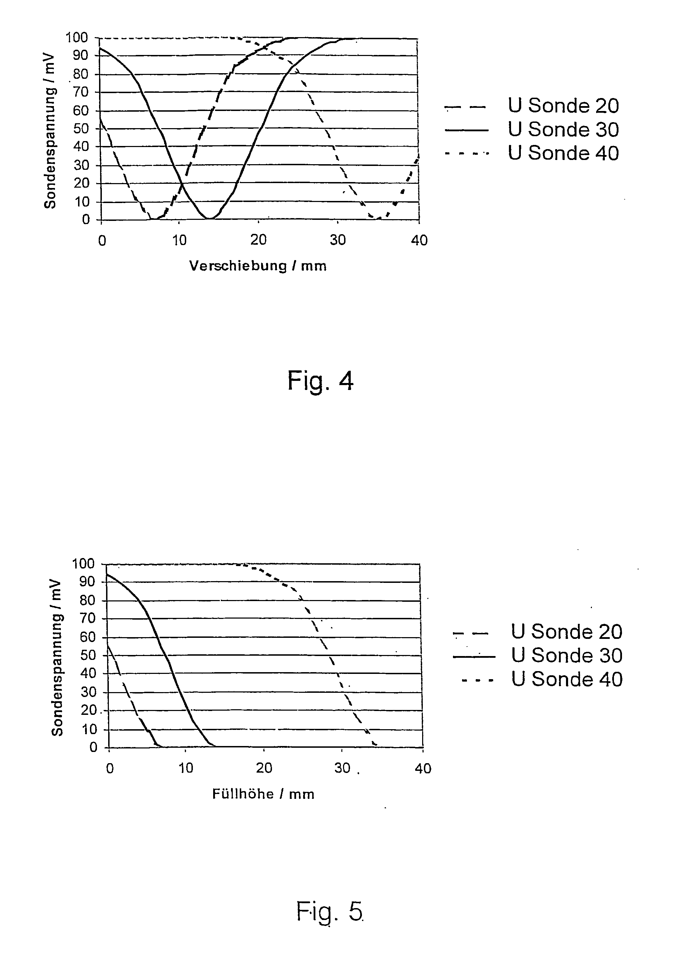

Ein Beispiel für eine einfache berührungslose Bestimmung der Verschiebung eines Gegenstands 12 unter Einsatz einer erfindungsgemäßen Vorrichtung und des erfindungsgemäßen Verfahrens wird unter Bezugnahme auf Figur 4 erläutert.

Aufgetragen ist dort die Sondenspannung von insgesamt drei Sonden 20, 30, 40, die etwa wie in den Figuren 1 bis 3 schematisch dargestellt angeordnet sind. Wie aus Figur 4 ersichtlich, wird der Minimalwert der Sondenspannung der Sonde 20 erreicht, wenn sich Sonde 20 und Gegenstand 12 genau gegenüber stehen. Bewegt sich der Gegenstand 12 in Richtung der Sonde 30, wird die Spannung an der Sonde 20 wieder größer und die Spannung an der Sonde 30 wird entsprechend kleiner.

Durch Mitschreiben der Sondenspannungen über die Zeit kann also die Position des Gegenstands 12 in Abhängigkeit der Zeit dargestellt werden.

Aus Figur 4 ist außerdem ersichtlich, dass sich die Empfindlichkeitskurven der Sonden 20, 30 sehr stark überlappen, so dass in diesem Bereich eine hohe Ortsauflösung erzielt wird.

Ein weiteres Anwendungsbeispiel der vorliegenden Erfindung wird anhand von Figur 5 erläutert. Dort sind wiederum die Sondenspannungen der drei Sonden 20, 30, 40 dargestellt für einen Anwendungsfall, bei dem der Füllstandspegel einer Flüssigkeit oder eines Schüttguts als Zielobjekt nachgewiesen wird.

Bei der Erfassung von Flüssigkeiten oder Schüttgütern werden die Sonden 20, 30, 40 bevorzugt vertikal angeordnet. Bei einem Anstieg des Flüssigkeits- oder Schüttgutstands werden sukzessive die Kapazitäten der weiter oben liegenden Sonden zur Umgebung vergrößert. Die Kapazitätswerte der unten angeordneten Sonden bleiben durch die dort weiterhin vorhandene Flüssigkeit bzw. das Schüttgut unverändert groß. Die Auswertung der Sondenspannungen muss für Flüssigkeiten oder Schüttgüter deshalb anders erfolgen als bei einem einzelnen nachzuweisenden Gegenstand.

Diese Zusammenhänge sind in Fig. 5 veranschaulicht.

Der Minimalwert der Sondenspannung der Sonde 20 wird erreicht, wenn die Sonde 20 voll von der Flüssigkeit oder dem Schüttgut überdeckt wird. Steigt der Flüssigkeits- bzw. Schüttgutstand weiter an, wird auch die Spannung an der Sonde 30 kleiner und sinkt schließlich bis auf den Minimalwert ab. Im Unterschied zu dem in Figur 4 gezeigten Anwendungsfall steigen selbstverständlich die Sondenspannungen, sobald die entsprechende Sonde einmal von der Flüssigkeit oder dem Schüttgut überdeckt ist, nicht wieder an.

Mit der vorliegenden Erfindung werden eine neue Vorrichtung, eine Sensoranordnung und ein Verfahren zur berührungslosen kapazitiven Positionserfassung eines Gegenstands vorgeschlagen, die einerseits eine besonders genaue Bestimmung der Position eines Gegenstands oder auch von Flüssigkeiten und Schüttgütern ermöglicht und die andererseits konstruktiv, vor allem im Vergleich zu bekannten induktiven Lösungen, besonders einfach zu realisieren ist.

**Patentansprüche**

1. Vorrichtung zur kapazitiven Positionserfassung eines Zielobjekts, insbesondere zur Durchführung des Verfahrens nach einem der Ansprüche 14 bis 18, mit einer Mehrzahl von kapazitiven Sonden (20, 30, 40), die über einen Nachweisbereich (16), in dem eine Position des Zielobjekts (12) erfassbar sein soll, verteilt angeordnet sind,
**dadurch gekennzeichnet,**
**dass** eine Abhängigkeit der Sondenspannungen vom Abstand des Zielobjekts (12) zur jeweiligen kapazitiven Sonde (20, 30, 40) zur Positionsbestimmung auswertbar ist,
**dass** die Sonden (20, 30, 40) jeweils über Koppelkapazitäten (22, 32, 42) mit einer Spannungsquelle (14) verbunden und mit einer Speisespannung beaufschlagbar sind, wobei die Kapazitäten (24, 34, 44) der Sonden (20, 30, 40) zur Umgebung zusammen mit den Koppelkapazitäten (22, 32, 42) jeweils einen kapazitiven Spannungsteiler mit den Sondenspannungen als Mittenspannungen bilden, und dass eine mit den Sonden (20, 30, 40) verbundene Auswerteeinrichtung (50) vorgesehen ist, mit welcher die Sondenspannungen zu einem Ausgangssignal (52), das ein Maß für die Position des zu erfassenden Zielobjekts (12) ist, verarbeitbar sind.

2. Vorrichtung nach Anspruch 1,
**dadurch gekennzeichnet,**
**dass** die Koppelkapazitäten (22, 32, 42) wenigstens teilweise als diskrete Kondensatoren (23, 33, 43) ausgebildet sind.

3. Vorrichtung nach Anspruch 1 oder 2,
**dadurch gekennzeichnet,**
**dass** mindestens eine der Sonden (20, 30, 40) als Referenzsonde ausgebildet ist.

4. Vorrichtung nach einem der Ansprüche 1 bis 3,
**dadurch gekennzeichnet,**
**dass** die Sonden (20, 30, 40) über einen dreidimensionalen Nachweisbereich (16) verteilt angeordnet sind.

5. Vorrichtung nach einem der Ansprüche 1 bis 4,
**dadurch gekennzeichnet,**
**dass** die Auswerteeinrichtung (50) für jede Sonde (20, 30, 40) einen Gleichrichter (26, 36, 46) aufweist.

6. Vorrichtung nach einem der Ansprüche 1 bis 5,
**dadurch gekennzeichnet,**
**dass** die Auswerteeinrichtung (50) eine zentrale Verarbeitungseinheit, insbesondere einen Mikroprozessor (54), aufweist.

7. Vorrichtung nach Anspruch 6,
**dadurch gekennzeichnet,**
**dass** die Auswerteeinrichtung (50) einen Multiplexer (56) aufweist, über den die Sondensignale von mindestens zwei Sonden (20, 30, 40) der zentralen Verarbeitungseinheit zuführbar sind.

8. Vorrichtung nach einem der Ansprüche 1 bis 7,
**dadurch gekennzeichnet,**
**dass** die Auswerteeinrichtung (50) zur Vorverarbeitung der analogen Sondensignale einen Signalprozessor aufweist.

9. Vorrichtung nach einem der Ansprüche 1 bis 8,
**dadurch gekennzeichnet,**
**dass** die Mehrzahl von kapazitiven Sonden (20, 30, 40), die in einem ersten Bereich, insbesondere auf einer Seite (71), eines Trägers (70) über den Nachweisbereich (16), in dem die Position des Zielobjekts (12) erfassbar sein soll, verteilt angeordnet sind,
**dass** zur Bildung der Koppelkapazitäten (22, 32, 42) in einem zweiten Bereich, insbesondere auf einer gegenüberliegenden Seite (73), des Trägers (70) mindestens eine Koppelelektrode (80), über welche eine Speisespannung auf die Sonden (20, 30, 40) einkoppelbar ist, vorgesehen ist und
**dass** der Träger (70) zur Bildung einer Koppelschicht (72) wenigstens teilweise aus einem dielektrischen Material gebildet ist.

10. Vorrichtung nach Anspruch 9,
**dadurch gekennzeichnet,**
**dass** der Träger (70) als, insbesondere flexible, Leiterplatte ausgebildet ist.

11. Vorrichtung nach einem der Ansprüche 9 oder 10,
**dadurch gekennzeichnet,**
**dass** auf dem Träger (70) wenigstens Teile (90) einer Auswerteelektronik angeordnet sind.

12. Vorrichtung nach einem der Ansprüche 9 bis 11,
**dadurch gekennzeichnet,**
**dass** die Koppelelektrode (80) als einheitliche Potentialfläche, insbesondere als durchgehende metallische Schicht, ausgebildet ist.

13. Vorrichtung nach einem der Ansprüche 9 bis 12,

**dadurch gekennzeichnet,**

**dass** zur Abschirmung oder zur Aufnahme von Schaltungskomponenten auf oder in dem Träger (70) weitere Metallschichten (86) vorgesehen sind.

14. Verfahren zur kapazitiven Positionserfassung eines Zielobjekts,
bei dem eine Mehrzahl von kapazitiven Sonden (20, 30, 40) über einen Nachweisbereich (16), in dem eine Position des Zielobjekts (12) erfasst werden soll, angeordnet wird,
**dadurch gekennzeichnet,**
**dass** die Sondenspannungen vom Abstand des Zielobjekts zur jeweiligen Sonde abhängen und zur Positionsbestimmung des Zielobjekts ausgewertet werden,
**dass** die Sonden (20, 30, 40) jeweils über Koppelkapazitäten (22, 32, 42) mit einer Speisespannung beaufschlagt werden, wobei durch die Koppelkapazitäten (22, 32, 42) und durch die aufgrund einer Positionsänderung des nachzuweisenden Zielobjekts (12) variierenden Kapazitäten (24, 34, 44) der Sonden (20, 30, 40) zur Umgebung kapazitive Spannungsteiler mit den Sondenspannungen als Mittenspannungen gebildet werden, und
**dass** die Sondenspannungen mit einer Auswerteeinrichtung (50) zu einem Ausgangssignal, das ein Maß für die Position des zu erfassenden Zielobjekts (12) ist, verarbeitet werden.

15. Verfahren nach Anspruch 14,
**dadurch gekennzeichnet,**
**dass** ein diskreter Gegenstand, eine Flüssigkeit oder ein Schüttgut nachgewiesen wird.

16. Verfahren nach Anspruch 14 oder 15,
**dadurch gekennzeichnet,**
**dass** alle Koppelkapazitäten (22, 32, 42) mit derselben Speisespannung mit einer bestimmten Frequenz beaufschlagt werden.

17. Verfahren nach einem der Ansprüche 14 bis 16,
**dadurch gekennzeichnet,**
**dass** zur Auswertung der Sondensignale die Quotienten mehrerer Sondenspannungen gebildet werden.

18. Verfahren nach einem der Ansprüche 14 bis 17,
**dadurch gekennzeichnet,**
**dass** bei der Auswertung die Signalspannung mindestens einer Referenzsonde berücksichtigt wird.

**Claims**

1. Device for the capacitive position finding of a target object, particularly for performing the method according to one of the claims 14 to 18,
having a plurality of capacitive probes (20, 30, 40) distributed over a detection area (16) in which a position of the target object (12) is to be determined,
**characterized in that**
a dependence of the probe voltages on the spacing of the target object (12) from the given capacitive probe (20, 30, 40) is evaluable for position determination,
that the probes (20, 30, 40) are in each case connected across coupling capacitances (22, 32, 42) to a voltage supply (14) and can be supplied with a supply voltage, the capacitances (24, 34, 44) of the probes (20, 30, 40) to the environment together with the coupling capacitances (22, 32, 42) in each case forming a capacitive voltage divider with the probe voltages as mean voltages and
that an evaluating device (50) connected to the probes (20, 30, 40) is provided and which enables the probe voltages to be processed to an output signal (52), which is a measure for the position of the target object (12) to be found.

2. Device according to claim 1,
**characterized in that**
the coupling capacitances (22, 32, 42) are at least partly constructed as discreet capacitors (23, 33, 43).

3. Device according to claims 1 or 2,
**characterized in that**
at least one of the probes (20, 30, 40) is constructed as a reference probe.

4. Device according to one of the claims 1 to 3,
**characterized in that**
the probes (20, 30, 40) are distributed over a three-dimensional detection area (16).

5. Device according to one of the claims 1 to 4,
**characterized in that**
the evaluating device (50) for each probe (20, 30, 40) has a rectifier (26, 36, 46).

6. Device according to one of the claims 1 to 5,
**characterized in that**
the evaluating device (50) has a central processing unit, particularly a microprocessor (54).

7. Device according to claim 6,
**characterized in that**
the evaluating unit (50) has a multiplexer (56) by means of which the probe signals of at least two probes (20, 30, 40) can be supplied to the central processing unit.

8. Device according to one of the claims 1 to 7,
**characterized in that**
the evaluating device (50) has a signal processor for preprocessing the analog probe signals.

**9.** Device according to one of the claims 1 to 8, **characterized in that**
the plurality of capacitive probes (20, 30, 40) which, in a first area, particularly on one side (71), of a support (70) are distributed over the detection area (16) in which the position of the target object (12) is to be found, that for forming the coupling capacitances (22, 32, 42) in a second area, particularly on a facing side (73), of the support (70) there is at least one coupling electrode (80) by means of which a supply voltage can be coupled onto the probes (20, 30, 40) and
that the support (70) for forming a coupling layer (72) is at least partly made from a dielectric material.

**10.** Device according to claim 9, **characterized in that**
the support (70) is constructed as a, in particular flexible, printed circuit board.

**11.** Device according to one of the claims 9 or 10, **characterized in that**
at least parts (90) of evaluating electronics are placed on the support (70).

**12.** Device according to one of the claims 9 to 11, **characterized in that**
the coupling electrode (80) is constructed as a uniform potential surface, particularly as a continuous, metallic layer.

**13.** Device according to one of the claims 9 to 12, **characterized in that**
for shielding or receiving circuit components further metal layers (86) are provided on or in the support (70).

**14.** Method for capacitive position finding of a target object, in which a plurality of capacitive probes (20, 30, 40) is arranged over a detection area (16) in which a position of the target object (12) is to be determined,
**characterized in that**
the probe voltages are dependent on the spacing of the target object from the given probe and are evaluated for determining the position of the target object,
that the probes (20, 30, 40) are in each case supplied with a supply voltage across coupling capacitances (22, 32 42), capacitive voltage dividers with the probe voltages as mean voltages being formed through the coupling capacitances (22, 32, 42) and by the capacitances (24, 34, 44) of probes (20, 30, 40) to the environment varying as a result of a position change of the target object (12) to be detected and
that the probe voltages are processed with an evaluating device (50) to an output signal, which is a measure of the position of the target object (12) to be found.

**15.** Method according to claim 14, **characterized in that**
a discreet object, a liquid or a bulk material is detected.

**16.** Method according to claim 14 or 15, **characterized in that**
all the coupling capacitances (22, 32, 42) are supplied with the same supply voltage with a given frequency.

**17.** Method according to one of the claims 14 to 16, **characterized in that**
the quotients of several probe voltages are formed for evaluating the probe signals.

**18.** Method according to one of the claims 14 to 17, **characterized in that**
the signal voltage of at least one reference probe is taken into account during evaluation.

**Revendications**

**1.** Dispositif de détection capacitive de la position d'un objet cible, en particulier pour appliquer le procédé selon l'une quelconque des revendications 14 à 18, avec une pluralité de sondes capacitives (20, 30, 40) qui sont réparties sur une zone de détection (16) dans laquelle une position de l'objet cible (12) doit pouvoir être détectée,
**caractérisé**
**en ce qu'**une dépendance des tensions de sonde vis-à-vis de la distance de l'objet cible (12) depuis la sonde capacitive (20, 30, 40) respective peut être exploitée pour la détermination de position,
**en ce que** les sondes (20, 30, 40) sont chacune reliées par l'intermédiaire de capacités de couplage (22, 32, 42) à une source de tension (14) et peuvent être exposées à une tension d'alimentation, dans lequel les capacités (23, 34, 44) des sondes (20, 30, 40) avec l'environnement forment avec les capacités de couplage (22, 32, 42) à chaque fois un diviseur de tension capacitif avec les tensions de sonde comme tensions médianes, et
**en ce qu'**il est prévu un dispositif d'analyse (50) relié aux sondes (20, 30, 40) avec lequel les tensions de sonde peuvent être transformées en un signal de sortie (52) qui est une mesure de la position de l'objet cible (12) devant être détectée.

**2.** Dispositif selon la revendication 1, **caractérisé en ce que** les capacités de couplage (22, 32, 42) sont conformées au moins partiellement en condensateurs discrets (23, 33, 43).

**3.** Dispositif selon la revendication 1 ou 2, *caractérisé en ce qu'*au moins l'une des sondes (20, 30, 40) est conformée en sonde de référence.

**4.** Dispositif selon l'une quelconque des revendications 1 à 3, *caractérisé en ce que* les sondes (20, 30, 40) sont réparties sur une zone de détection (16) tridimensionnelle.

**5.** Dispositif selon l'une quelconque des revendications 1 à 4, *caractérisé en ce que* le dispositif d'analyse (50) comprend pour chaque sonde (20, 30, 40) un redresseur (26, 36, 46).

**6.** Dispositif selon l'une quelconque des revendications 1 à 5, *caractérisé en ce que* le dispositif d'analyse (50) comprend une unité centrale de traitement, en particulier un microprocesseur (54).

**7.** Dispositif selon la revendication 6, *caractérisé en ce que* le dispositif d'analyse (50) comprend un multiplexeur (56) par l'intermédiaire duquel les signaux d'au moins deux sondes (20, 30, 40) peuvent être envoyés à l'unité centrale de traitement.

**8.** Dispositif selon l'une quelconque des revendications 1 à 7, *caractérisé en ce que* le dispositif d'analyse (50) comprend un processeur de signaux pour le prétraitement des signaux analogiques des sondes.

**9.** Dispositif selon l'une quelconque des revendications 1 à 8,
*caractérisé*
*en ce que* la pluralité de sondes capacitives (20, 30, 40) sont réparties dans une première zone, en particulier d'un côté (71) d'un support (70) sur la zone de détection (16) dans laquelle la position de l'objet cible (12) doit pouvoir être détectée,
*en ce que,* pour former les capacités de couplage (22, 32, 42) il est prévu dans une deuxième zone, en particulier d'un côté (73) opposé du support (70), au moins une électrode de couplage (80) par l'intermédiaire de laquelle une tension d'alimentation peut être appliquée sur les sondes (20, 30, 40), et
*en ce que* le support (70) est formé au moins partiellement d'un matériau diélectrique pour former une couche de couplage (72).

**10.** Dispositif selon la revendication 9, *caractérisé en ce que* le support (70) est conformé en circuit imprimé, en particulier souple.

**11.** Dispositif selon l'une quelconque des revendications 9 ou 10, *caractérisé en ce qu'*au moins des parties (90) d'une électronique d'analyse est placée sur le support (70).

**12.** Dispositif selon l'une quelconque des revendications 9 à 11, *caractérisé en ce que* l'électrode de couplage (80) est conformée en surface de potentiel uniforme, en particulier en couche métallique continue.

**13.** Dispositif selon l'une quelconque des revendications 9 à 12, *caractérisé en ce que* pour le blindage ou pour recevoir des composants de commutation sur ou dans le support (70), d'autres couches métalliques (86) sont prévues.

**14.** Procédé de détection capacitive de position d'un objet cible,
dans lequel une pluralité de sondes capacitives (20, 30, 40) est placée sur une zone de détection (16) dans laquelle une position de l'objet cible (12) doit être détectée,
*caractérisé*
*en ce que* les tensions des sondes dépendent de la distance de l'objet cible depuis la sonde concernée et sont exploitées pour déterminer la position de l'objet cible,
*en ce que* les sondes (20, 30, 40) sont alimentées avec une tension d'alimentation chacune par l'intermédiaire de capacités de couplage (22, 32, 42), dans lequel des diviseurs de tension ayant les tensions des sondes comme tensions médianes sont formés par les capacités de couplage (22, 32, 42) et par les capacités (24, 34, 44) des sondes (20, 30, 40) qui varient par suite d'une variation de position de l'objet cible (12) à détecter, et
*en ce que* les tensions des sondes sont transformées par un dispositif d'analyse (50) en un signal de sortie qui est une mesure de la position de l'objet cible (12) à détecter.

**15.** Procédé selon la revendication 14, *caractérisé en ce qu'*un objet discret, un liquide ou une matière en vrac est détecté.

**16.** Procédé selon la revendication 14 ou 15, *caractérisé en ce que* toutes les capacités de couplage (22, 32, 42) sont alimentées avec la même tension d'alimentation à une certaine fréquence.

**17.** Procédé selon l'une quelconque des revendications 14 à 16, *caractérisé en ce que,* pour analyser les signaux des sondes, on forme les quotients de plusieurs tensions de sonde.

**18.** Procédé selon l'une quelconque des revendications 14 à 17, *caractérisé en ce que,* lors de l'analyse, la tension du signal d'au moins une sonde de référence est prise en compte.

Fig. 1

Fig. 2

Fig. 3

Fig. 4

Fig. 5

Fig. 6

Fig. 7

Fig. 8

Fig. 9

**EP 1 735 595 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19851213 C1
- DE 19623969 A1
- DE 19503203 A1
- EP 0609021 A2
- US 5136286 A
- EP 0302727 A2
- DE 10204453 A1